# EUROPEAN PATENT SPECIFICATION

(11) **EP 1 282 569 B1**
(45) Date of publication and mention of the grant of the patent: **07.09.2005**
(21) Application number: 00978833.2
(22) Date of filing: 20.11.2000
(51) Int. Cl.: B65D 90/02, B65D 90/12, B65D 1/02, B65D 79/00

(54) **PASTEURIZABLE WIDE-MOUTH CONTAINER**
PASTEURISIERBARER BEHÄLTER MIT WEITER ÖFFNUNG
RECIPIENT A GRANDE OUVERTURE PASTEURISABLE

(30) Priority: 01.12.1999 US 168357 P
(43) Date of publication of application: 12.02.2003
(73) Proprietor: Graham Packaging Company, L.P., York, PA 17402 (US)
(72) Inventor: SEMERSKY, Frank, Toledo, OH 43617 (US); TOBIAS, John, W., Lancaster, PA 17603 (US); STEWART, Robert, A., York, PA 17403 (US)
(74) Representative: Hanson, William Bennett
(86) International application number: PCT/US2000/031834
(87) International publication number: WO 2001/040081

(56) References cited:
- DE-A- 19 520 925
- FR-A- 1 571 499
- FR-A- 2 772 365
- US-A- 3 397 724
- US-A- 4 170 622
- US-A- 5 281 387
- US-A- 5 341 946
- US-A- 5 690 244
- US-B1- 6 230 912
- US-S- D 269 158
- US-S- D 415 030

## Description

### Field of the Invention

The present invention relates to blow-molded plastic containers, and more particularly, the present invention relates to a wide-mouth blow-molded plastic container which is particularly suited for containing volatile food products that require pasteurization at elevated temperatures after the container has been filled and capped.

### Background of the Invention

Glass has been the material of choice for pasteurizable containers designed to package volatile food products that off-gas after filling and sealing. Such products include, but are not limited to, pickles, relish, sauerkraut, and the like. Glass has been desirable because of its strength and low cost; however, glass containers are heavy and breakable.

There is a need for a plastic container which is particularly suited for packaging the afore- described products by being robust enough to withstand the rigors of heat pasteurization. For instance, such a container must be capable of withstanding internal pressures at high temperatures, followed by internal vacuum at lower and ambient temperatures. Hot-filled PET (polyethylene terepthalate) narrow neck bottles have been commercialized for containing liquids, and hot-filled PET wide-mouth food jars have been commercialized for containing non-volatile food products such as applesauce, jams, jellies, and the like which do not off-gas after filling and capping. To date, there is no known commercially-available, wide-mouth, PET container that is capable of being filled with volatile food products, capped, and subsequently pasteurized.

The preamble of claim 1 is based on US-A-5,908,128, which discloses a narrow-mouth, blow-molded plastic container used to contain liquid products which are pasteurized after filling and capping. The disclosed container uses specifically defined peripheral flex panels to accommodate the pressure and volume changes inside the capped container.

U.S. Patent No. 4,642,968 disclosed a wide-mouth, blow-molded plastic container that is used for containing products that undergo pasteurization. The container disclosed in this patent utilizes bottom-bulging of the container body to accommodate internal pressure and volumetric changes.

U.S. Patent No. 5,887,739, owned by Graham Packaging Co., L.P., discloses a wide-mouth, blow-molded PET container suitable for hot filling with viscous food products such as applesauce.

### Object of the Invention

With the foregoing in mind, a primary object of the present invention is to provide a method of using a pasteurizable plastic container which satisfactorily resists internal pressures due to increased vapor pressures during heating and contained volatile food products while withstanding internal vacuum conditions on cool-down to ambient temperatures after pasteurization.

### Summary of the Invention

More specifically, the present invention provides a method of packaging a food product according to claim 1. The container used is capable of accommodating, without undesirable distortion, super-baric pressures when filled with volatile food products and pasteurized, and sub-baric pressures after cooling to ambient temperatures. The plastic container comprises a cylindrical sidewall having a plurality of peripheral vertically-spaced grooves. A dome with a wide-mouth opening adapted to receive a sealed closure is located above the sidewall, and a footed pressure-resistant base is located below the sidewall. An upper label bumper extends around the upper end of the sidewall subjacent the dome, and a lower label bumper extends around the lower end of the sidewall super- adjacent the base. In the aforedescribed structure, the sidewall grooves cooperate with the dome and base to stiffen the sidewall against undesirable distortion due to the swing from super-baric to sub-baric pressures within the container. Preferably, the sidewall has a crystallinity in excess of 25 percent; and the base is of petaloid configuration. The wide-mouth opening has a diameter which is sufficiently large to afford access to the container and removal of contained food products by means of a conventional item of tableware.

### Brief Description of the Drawing

The foregoing and other objects, features and advantages of the present invention should become apparent from the following description when taken in conjunction with the accompanying drawing, in which:
Fig. 1 is a side elevational view of a container embodying the present invention;

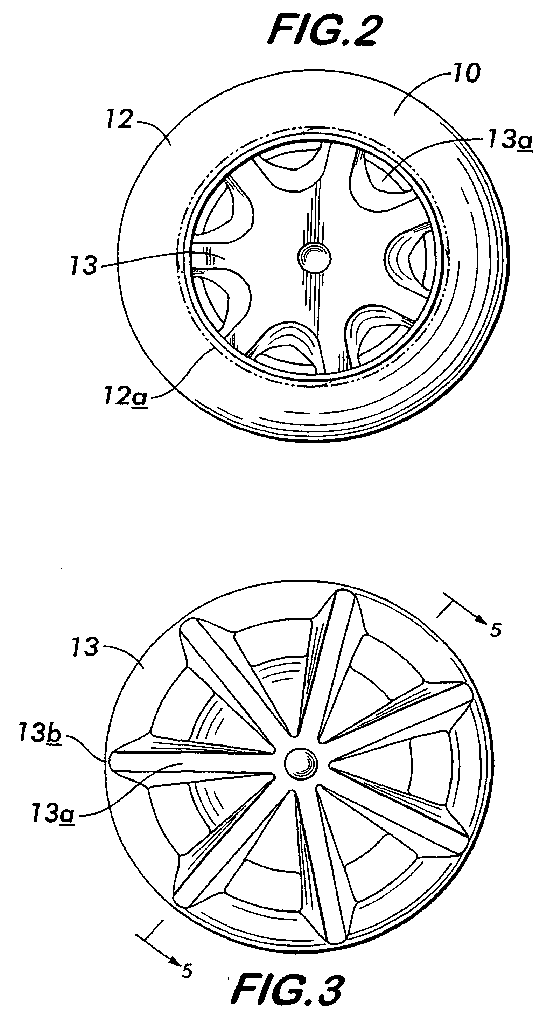

Fig. 2 is a plan view of the container of Fig. 1;
Fig. 3 is an inverted plan view of the container illustrated in Fig. 1;

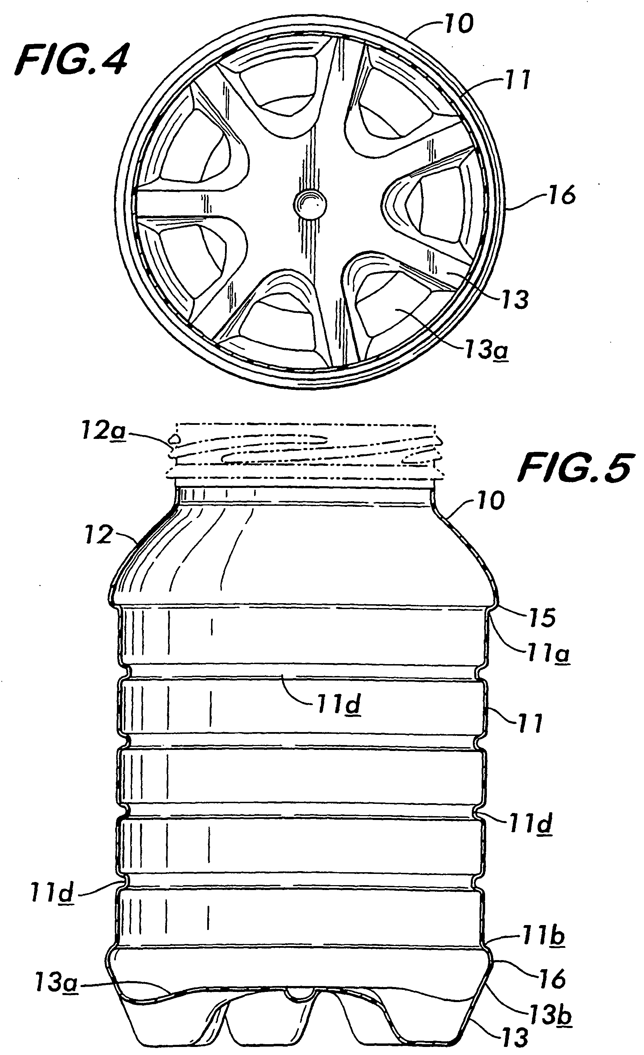

Fig. 4 is a transverse sectional view taken on line 4-4 of Fig. 1; and
Fig. 5 is a longitudinal sectional view taken on line 5-5 of Fig. 3.

### Description of Preferred Embodiment

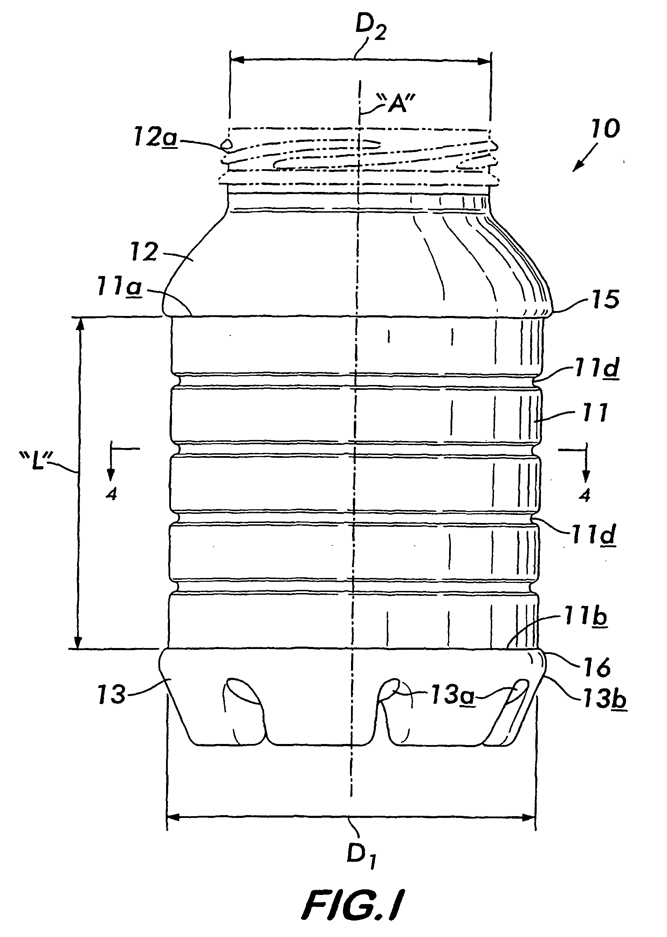

Fig. 1 illustrates a container 10 which embodies the present invention. The container 10 has a sidewall 11, a dome 12 superadjacent the sidewall 11, and a base 13 below the sidewall 11. The dome 12 has a wide-mouth, threaded finish 12a which is blow-molded such as in the manner described in U.S. Patent No. 5,887,739, the disclosure of which is incorporated by reference wherein.

The base 13 is of conventional construction, being of a so-called footed, petaloid, pressure-resistant configuration. The base 13 includes a plurality of radially extending, downwardly concave ribs 13a which extend outwardly from the longitudinal axis "A" of the container 10 to the outer surface 13b of the base 13. The disclosed footed, petaloid base design is well known in the art and is exemplified in expired U.S. Patent No. 3,935,955. Such bases have found particular utility in carbonated beverage containers.

The sidewall 11 is adapted to receive a conventional label. In order to protect the label, as well known in the art, an upper label bumper 15 is provided subjacent bottom of the dome 12 around the upper edge 11a of the sidewall. 11. A similar lower label bumper 16 is provided superadjacent the base 13 around the lower edge 11b of the sidewall 11. The upper and lower label bumpers 15 and 16 extend radially outward a slight distance from the sidewall 11 and about the container periphery to provide protection for a label, not shown, applied to the sidewall 11 as well known in the art.

The disclosed container has a capacity of twenty-four ounces. The sidewall 11 has a length "L" which is substantially equal to its diameter in D₁. The blown finish 12a has an outer diameter D₂. Preferably, the diameter D₂ is about 80 percent of the diameter D₂. This enables the contents of the container 10 to be accessed readily by means of a conventional item of tableware, such as a fork or tablespoon.

In the illustrated embodiment, the sidewall 11 is reinforced at spaced vertical intervals by means of a plurality of continuous peripheral grooves 11d. Desirably, the grooves 11d are located on approximately 15 mm (.6 inch) centers and extend continuously about the periphery of the sidewall 11. Desirably, each groove 11d has a depth of approximately 2 mm (0.08 inches) and is formed by bottom radius of curvature of 1.52 mm (0.06 inches) and upper and lower bottom connecting radii of curvatures of 3 mm (0.118 inches). This groove construction enables the sidewall to accommodate changes in volume and pressure inside the container, as will be discussed.

The disclosed container 10 is preferably molded of PET. The container 10 is blow-molded from a preform that has a portion which is blown outwardly to form the finish 12a, after which a moil portion of the blown preform above the finish 12a is severed. In the molding process the preform is stretched axially, and the mold temperature and residence time is designed to provide the sidewall 11 with a crystallinity of at least 25 percent throughout its entire length L. The thickness of the sidewall 11 is about 0.762 mm (.030 inches) above and below, and in- between, the grooves 11b. The nominal weight of the disclosed container 10 is preferably less than about 53 grams.

A container of the configuration illustrated in the drawing has been blown and tested in a laboratory setting. The test container 10, illustrated in Fig. 1 (drawn to full scale) had an overall sidewall length of 82.91 mm (3.264 inches); an outer sidewall diameter D₁ of 86.36 mm (3.4 inches); and a finish diameter D₂ of slightly less than 69.9 mm (2.75 inches). The container 10 was filled with a volatile vegetable that off-gases, such as pickles in an aqueous medium, to a level of 6.35 mm (0.250 inch) from the upper edge of the finish 12a. A sealed cap was applied to the finish 12a, and the thus-filled container 10 was pasteurized at a temperature of in a range of 93.3 - 98.9°C (200 - 210°F) for 10 - 20 minutes. A control glass jar of like capacity and size was used to simulate the pressures and temperatures developed inside the container 10 during and after pasteurization. The container was allowed to cool to ambient temperature subsequent to the pasteurization cycle. During pasteurization, pressures within the container 10 exceeded 33860 Pa (10 inches Hg). The container did not undergo undesirable distortion such as would be considered unsatisfactory in commercial practice.

It is believed that the petaloid, pressure-resistant, footed base 13 enabled the container 10 to withstand the internal pressures developed during pasteurization while the grooved sidewall 11 cooperated with the other disclosed structures to accommodate both super-baric and sub-baric pressure and volume changes resulting from cool down of the container 10 to ambient temperatures.

Since pasteurization is a time-temperature phenomenon, the temperature range in practice may be as low as 87.8° C (190° F) when longer residence times are used, and the time as short as 5 minutes when higher temperatures are used. Also, while the test was conducted with pickles, other volatile vegetables including, relish, sauerkraut, artichokes, and the like may be suitably pasteurized in the disclosed container.

An advantage of selecting the disclosed container for use in packaging pickles is the energy and water savings that can be realized. This is because for the past seventy five years pickles have been packed in glass jars which require staged heat treatment due to the inability of glass to accommodate rapid temperature changes. Currently, cold pickles are charged into empty, pre-heated glass jars, and brine at 54.4°C (130° F) is added. After capping, the sealed glass jar is heated to a temperature in a range of 90.6 - 98.9°C (195 - 210° F) for 10 - 20 minutes to heat the center of the pickles contained in the jar to a minimum temperature of 73.9°C (165° F) for 15 minutes. Thereafter, the pasteurized jar is stage cooled to 82.2°C (180° F) for 10 - 20 minutes, followed by 60°C (140° F) for 10 - 20 minutes, and then cooling to ambient.

With the disclosed PET plastic container, brine can be added at 82.2°C (180° F) to a container at ambient temperatures with sterilization at 87.8°C (190° F) for a shorter period of time, followed by cooling to ambient. This results in a shorter processing time, reduced energy consumption, and a saving in water.

In view of the foregoing, it is apparent that the present invention provides a wide-mouth, blow-molded PET plastic container which can be substituted for glass to contain food products that off-gas during pasteurization.

While a preferred embodiment of the present invention has been described in detail, modifications, alterations and changes may be made without departing from the scope of the present invention as defined in the appended claims.

## Claims

1. An energy efficient method of packaging a food product, comprising the steps of:
selecting a blow-moulded plastic container (10) having a sidewall (11) with a plurality of peripheral vertically spaced grooves (11d), a dome (12) located above said sidewall (11) having a wide-mouth opening (12a) adapted to receive a sealed closure, a footed base (13) below said sidewall (11), an upper label bumper (15) extending around the upper end (11a) of said sidewall (11) subjacent said dome (12), a lower label bumper (16) extending around the lower end (11b) of said sidewall (11) superadjacent said base;
hot-filling the container (10) with said food product at a temperature at least about 82.2 °C (180 °F);
capping the filled container (10);
heating the filled and capped container (10) for a period in a range of 5 - 20 minutes at a temperature in the range of at least about 87.8 - 98.9 °C (190 - 210 °F); and
cooling the thusly pasteurized filled and capped container (10) to ambient temperature.

2. The method according to claim 1 wherein said food product is a volatile vegetable in an aqueous medium.

3. The method according to claim 2 wherein said volatile vegetable is selected from the group consisting of: pickles, relish, sauerkraut and artichokes.

4. The method according to claim 1 wherein the container is at ambient temperature prior to hot-filling.

5. A method according to claim 1, **characterized in that** said base (13) has a footed, petaloid, pressure resistant configuration with a plurality of radially extending ribs (13a) that extend outwardly from adjacent a longitudinal axis of said container to an outer surface (13b) of said base, which ribs rigidify said base (13).

6. A method according to claim 5, **characterized in that** said sidewall (11) has a crystallinity in excess of 25%.

7. A method according to claim 6, **characterized in that** said wide mouth opening (12a) is blow-moulded.

8. A method according to claim 7, **characterized in that** said container is made of polyethylene terephthalate (PET).

## Patentansprüche

1. Energieeffizientes Verfahren zur Verpackung eines Nahrungsmittels mit den folgenden Schritten:
Auswählen eines blasgeformten Kunststoffbehälters (10) mit einer Seitenwand (11) mit mehreren um den Umfang vertikal beabstandeten Nuten (11d), einer sich über der Seitenwand (11) befindenden Kuppel (12) mit einer Weithalsöffnung (12a), die zur Aufnahme eines abgedichteten Verschlusses ausgeführt ist, einem mit Standfüßen versehenen Boden (13) unter der Seitenwand (11), einem oberen Etikettenpuffer (15), der sich um das obere Ende (11a) der Seitenwand (11) unter der Kuppel (12) liegend erstreckt, einem unteren Etikettenpuffer (16), der sich um das untere Ende (11b) der Seitenwand (11) über dem Boden liegend erstreckt;
Heißfüllen des Behälters (10) mit dem Nahrungsmittel bei einer Temperatur von mindestens ca. 82,2°C (180°F);
Verschließen des gefüllten Behälters (10);
Erhitzen des gefüllten und verschlossenen Behälters (10) für eine Zeitdauer in einem Bereich von 5 - 20 Minuten bei einer Temperatur in einem Bereich von mindestens ca. 87,8 - 98,9 °C (190 - 210°F); und
Kühlen des auf diese Weise pasteurisierten gefüllten und verschlossenen Behälters (10) auf Umgebungstemperatur.

2. Verfahren nach Anspruch 1, bei dem das Nahrungsmittel ein ausrauchendes Gemüse in einem wässrigen Medium ist.

3. Verfahren nach Anspruch 2, bei dem das ausrauchende Gemüse aus der Gruppe bestehend aus Pickels, Würze, Sauerkraut und Artischocken ausgewählt ist.

4. Verfahren nach Anspruch 1, bei dem der Behälter vor dem Heißfüllen Umgebungstemperatur aufweist.

5. Verfahren nach Anspruch 1, **dadurch gekennzeichnet, dass** der Boden (13) eine mit Standfüßen versehene, petaloide, druckbeständige Konfiguration mit mehreren sich radial erstreckenden Rippen (13a) aufweist, die sich von neben einer Längsachse des Behälters zu einer Außenfläche (13b) des Bodens erstrecken und den Boden (13) versteifen.

6. Verfahren nach Anspruch 5, **dadurch gekennzeichnet, dass** die Seitenwand (11) eine Kristallinität von über 25% aufweist.

7. Verfahren nach Anspruch 6, **dadurch gekennzeichnet, dass** die Weithalsöffnung (12a) blasgeformt ist.

8. Verfahren nach Anspruch 7, **dadurch gekennzeichnet, dass** der Behälter aus Polyetheylenterephthalat (PET) hergestellt ist.

## Revendications

1. Procédé à haut rendement pour conditionner un produit alimentaire, comprenant les étapes consistant à:
sélectionner un conteneur en plastique moulé par soufflage (10), comprenant une paroi latérale (11) comportant une pluralité de rainures périphériques espacées verticalement (11d), un dôme (12) situé au-dessus de ladite paroi latérale (11) présentant une ouverture à embouchure large (12a) adaptée pour recevoir une fermeture scellée, une base faisant office de pied (13) en dessous de ladite paroi latérale (11), un bourrelet supérieur pour étiquette (15) s'étendant autour de l'extrémité supérieure (11a) de ladite paroi latérale (11) sous-jacent audit dôme (12), un bourrelet inférieur pour étiquette (16) s'étendant autour de l'extrémité inférieure (11b) de ladite paroi latérale (11) surplombant ladite base;
remplir à chaud le conteneur (10) avec ledit produit alimentaire à une température égale à au moins 82,2°C (180°F);
poser un couvercle sur le conteneur (10) rempli;
chauffer le conteneur (10) rempli et fermé par le couvercle pendant une période comprise entre 5 et 20 minutes, à une température comprise dans la gamme allant d'environ 87,8°C à 98,9°C (190°F à 210°F); et
refroidir le conteneur (10) ainsi rempli, fermé et pasteurisé à la température ambiante.

2. Procédé selon la revendication 1, dans lequel ledit produit alimentaire est un légume volatil dans un milieu aqueux.

3. Procédé selon la revendication 2, dans lequel ledit légume volatil est sélectionné parmi le groupe comprenant le pickles, les condiments, la choucroute et les artichauts.

4. Procédé selon la revendication 1, dans lequel le conteneur se trouve à la température ambiante avant le remplissage à chaud.

5. Procédé selon la revendication 1, **caractérisé en ce que** ladite base (13) présente une configuration en forme de pétale résistant à la pression et faisant office de pied, comportant une pluralité de nervures s'étendant radialement (13a) s'étendant vers l'extérieur à partir d'un axe longitudinal adjacent dudit conteneur jusqu'à une surface extérieure (13b) de ladite base, lesdites nervures rigidifiant ladite base (13).

6. Procédé selon la revendication 5, **caractérisé en ce que** ladite paroi latérale (11) présente une cristallinité supérieure à 25 %.

7. Procédé selon la revendication 6, **caractérisé en ce que** ladite ouverture à embouchure large (12a) est moulée par soufflage.

8. Procédé selon la revendication 7, **caractérisé en** en ce que ledit conteneur est constitué de polyéthylène téréphtalate (PET).
